# EUROPÄISCHE PATENTSCHRIFT

(11) **EP 2 544 793 B1**
(45) Veröffentlichungstag und Bekanntmachung des Hinweises auf die Patenterteilung: **11.11.2015**
(21) Anmeldenummer: 11707675.2
(22) Anmeldetag: 10.03.2011
(51) Int. Cl.: B01D 46/24

(54) **FILTERELEMENT ZUR FLUIDFILTRATION, INSBESONDERE FÜR ANSAUGLUFT VON BRENNKRAFTMASCHINEN**
FILTER ELEMENT FOR FLUID FILTRATION, IN PARTICULAR FOR INTAKE AIR OF INTERNAL COMBUSTION ENGINES
ÉLÉMENT-FILTRE POUR FILTRATION DE FLUIDE, EN PARTICULIER POUR L'AIR D'ADMISSION DE MOTEURS À COMBUSTION INTERNE

(30) Priorität: 10.03.2010 DE 102010010964
(43) Veröffentlichungstag der Anmeldung: 16.01.2013
(73) Patentinhaber: Mann + Hummel GmbH, 71638 Ludwigsburg (DE)
(72) Erfinder: ACKERMANN, Steffen, 67376 Harthausen (DE); KAUFMANN, Michael, 67149 Meckenheim (DE); RUHLAND, Klaus-Dieter, 67149 Meckenheim (DE)
(74) Vertreter: Seyboth, Matthias
(86) Internationale Anmeldenummer: PCT/EP2011/053594
(87) Internationale Veröffentlichungsnummer: WO 2011/110619

(56) Entgegenhaltungen:
- EP-A1- 1 992 395
- WO-A1-95/09037
- WO-A1-2008/015088
- WO-A1-2008/015100
- DE-U1-202006 005 012
- DE-U1-202007 014 822

## Beschreibung

### Technisches Gebiet

Die Erfindung betrifft ein Filterelement zur Fluidfiltration, insbesondere für Ansaugluft von Brennkraftmaschinen nach dem Oberbegriff des Anspruchs 1 und eine Luftfiltereinheit.

### Stand der Technik

Aus der DE 20 2005 005 012 U1 ist ein Luftfilter mit einem in einer Ebene parallel zur Mittelachse des runden Filterelements geteilten Gehäuse bekannt.

Aus EP 1 992 395 A1 und WO 2008/015088 A1 sind Filterelemente in einem radial geteilten Gehäuse bekannt.

Aus der Offenlegungsschrift WO 2008/015100 A1 ist ein Filterelement in einem radial geteilten Gehäuse bekannt, wobei die Endscheiben des Filterelements mit Verbindungselementen zur Verbindung des Filterelements mit Gehäuseteilen versehen sind und wobei die Gehäuseteile mittels des Filterelements in ihrer Position fixiert werden. Durch diese Anordnung entstehen hohe Anforderungen hinsichtlich der Bauteiltoleranzen, insbesondere hinsichtlich der axialen Längentoleranzen.

Der Erfindung liegt die Aufgabe zugrunde, ein Filterelement zu schaffen, welches die Toleranzbedingungen verbessert und eine zuverlässige Abdichtung sicher stellt.

### Offenbarung der Erfindung

Diese Aufgabe wird von einem Filterelement mit den Merkmalen des Anspruchs 1 gelöst.

Das erfindungsgemäße Filterelement umfasst ein hohlzylindrisches, insbesondere sternförmig gefaltetes Filtermedium sowie eine auslassseitige Endscheibe und eine zweite Endscheibe und ein hohlzylindrisches Stützgitter (auch Mittelrohr genannt), welches im Innenraum des Filtermediums angeordnet ist. Das Stützgitter liegt vorzugsweise an der Innenwandung des hohlzylindrischen Filtermediums an und erstreckt sich von der auslassseitigen Endscheibe zur zweiten Endscheibe.

Erfindungsgemäß weist das Stützgitter am auslassseitigen Ende des Filterelements einen Anschlussbereich auf, in welchem das Stützgitter mit einem Kopplungselement zum Koppeln des Filterelements an ein Filtergehäuse, insbesondere an den Auslassstutzen eines Filtergehäuses, versehen ist, wobei das Kopplungselement erfindungsgemäß als Gewinde oder Bajonettverschluss ausgebildet und vorzugsweise radial innen angeordnet ist. Ebenso sind Außengewinde oder außen liegender Bajonettverschluss möglich. Alternativ kann eine Schnapp- oder Klemmverbindung vorgesehen sein.

Erfindungsgemäß weist das Stützgitter im Anschlussbereich einen radial nach außen abstehenden Kragen auf, der die auslassseitige Stirnfläche des Filtermediums teilweise überragt. Dieser wird gemeinsam mit der auslassseitigen Stirnfläche des Filtermediums von der auslassseitigen Endscheibe umschlossen, wobei erfindungsgemäß als Endscheibenmaterial ein elastisch verformbarer Kunststoff, insbesondere Polyurethan (PUR) verwendet wird. Die auslassseitige Endscheibe weist eine ringförmige Axialdichtung zur Trennung der Rohseite von der Reinseite in einem Filtergehäuse auf. Die Axialdichtung ist erfindungsgemäß einstückig mit der auslassseitigen Endscheibe, insbesondere als ringförmige axiale Erhebung ausgebildet, die bei der Montage des Filterelements in einem Gehäuse verpresst werden kann.

Erfindungsgemäß weist der Anschlussbereich an seinem Ende eine axiale Anlagefläche zur Anlage an einem Filtergehäuse auf. Auf diese Weise wird bei der Montage des Filterelements dessen Endposition im Wesentlichen durch die Maße des Stützrohres bestimmt. Die Dichtung wird genau so weit verformt, wie dies die Geometrie des Anschlussbereichs zulässt. Hierdurch wird die Position des Filterelements unabhängig von den Härte- und Maßtoleranzen der Axialdichtung.

Die auslassseitige Stirnseite des Filtermediums muss bei einem erfindungsgemäßen Filterelement nicht direkt an dem Kragen anliegen, sondern kann in einer vorteilhaften Ausführungsform von diesem leicht beabstandet sein (z. B. ca. 0,5-5 mm, insbesondere 0,5-2 mm). Dies hat den Vorteil, dass Längentoleranzen des Filtermediums keinen Einfluss auf die Länge des gesamten Filterelements haben. Ferner besteht der Vorteil darin, dass eine vollständige Umschließung des Kragens durch das Endscheibenmaterial gegeben ist.

Eine bevorzugte Ausführungsform sieht vor, dass das Filterelement an einem Stützgitter im Bereich einer Endscheibe oder direkt an einer Endscheibe als Kopplungselement einen Gewindeabsatz mit einem insbesondere konischen Gewinde aufweist. Aufgrund der Konizität des Gewindeabsatzes und einer dazu kompatiblen Gewindebohrung am Gehäuse ist eine Selbstzentrierung gegeben, wenn das Luftfilterelement auf das Gehäuseelement geschoben wird. Es genügt dann eine Drehung um einen relativ kleinen Winkel, um eine Vielzahl von Gewindegängen miteinander in Eingriff zu bringen und so eine entsprechend hohe Festigkeit der Gewindeverbindung gegenüber axialen Kräften zu bewirken.

Als vorteilhaft hat sich hier ein Sägezahngewinde erwiesen, welches gut als Bewegungsgewinde geeignet ist, welches schmutzunempfindlich ist und welches sich darüber hinaus leicht bewegen lässt. Beispielsweise ist ein konisches Sägezahngewinde geeignet, das bei einem Durchmesser von ca. 100 mm 2 bis 5, bevorzugt 3 Gewindegänge aufweist. In einer Ausführungsform sind die Gewindegänge in einem Kegelwinkel von ca. 3° bis 12°, bevorzugt 3 +/- 0,5° angeordnet.

In einer Ausführungsform weist das Material der auslassseitigen Endscheibe eine geringere Shore-Härte auf als das Material des Stützgitters.

In einer vorteilhaften Ausführungsform ist die Axialdichtung hinsichtlich der radialen Position im Bereich des Kragens angeordnet. Auf diese Weise wirkt die Kraft, welche durch das Verspannen des Filterelements im Gehäuse entsteht, auf den Kragen und wird von diesem abgestützt. Auf diese Weise können Scherkräfte an Verbindungsstellen zwischen Endscheibenmaterial und Filter- oder Stützgittermaterial vermieden werden.

In einer vorteilhaften Weiterbildung ist zwischen Kragen und Stirnfläche des Filtermediums ein Spalt vorgesehen, welcher durch Endscheibenmaterial gefüllt ist. Auf diese Weise kann die Übertragung von an der Axialdichtung entstehenden Kräften auf das Filtermedium minimiert werden.

In einer Ausführungsform ist der Kragen als Gitter ausgeführt. Auf diese Weise kann Endscheibenmaterial den Kragen durchdringen. Dies hat den Vorteil, dass die Belastbarkeit der Verbindung zwischen Kragen und Endscheibenmaterial verbessert wird.

In einer Ausführungsform überragt die Axialdichtung in unverspanntem Zustand die axiale Anlagefläche. Bei der Montage des Filterelements wird so die Dichtung unabhängig von Ihrer Höhe in unverspanntem Zustand bis auf Höhe der Anlagefläche verpresst.

In einer Ausführungsform dient die Dichtfläche des Gehäuses gleichzeitig als Anschlag für die Anlagefläche des Stützgitters.

In einer vorteilhaften Ausführungsform umfasst der Kragen einen ersten, parallel zur Mittelachse verlaufenden Abschnitt und einen an den ersten Abschnitt anschließenden zweiten, senkrecht zur Mittelachse verlaufenden Abschnitt. Die Abschnitte bilden dabei einen Winkel, welcher die innere Kante der auslassseitigen Stirnfläche des Filtermediums einschließt.

In einer vorteilhaften Weiterbildung verläuft der erste Abschnitt parallel zu und beabstandet vom Anschlussbereich des Stützgitters. Er ist dabei vorteilhafter Weise mittels eines ringförmig umlaufenden Steges oder einer Vielzahl von umlaufend angeordneten Stegen mit dem Anschlussbereich verbunden. Auf diese Weise kann der Kragen derart in die auslassseitige Endscheibe eingebettet sein, dass das Material der Endscheibe nicht mit dem Hauptteil des Stützgitters bzw. nicht mit dem Anschlussbereich verbunden ist. Dies ist insbesondere bei Endscheiben von Vorteil, welche aus im Rohzustand fließfähigen Materialien wie z. B. Polyurethan (PUR) in einem Gießverfahren, insbesondere in Gießschalen hergestellt und dabei mit dem Filtermedium und dem Kragen verbunden werden.

In einer Ausführungsform ist die zweite Endscheibe geschlossen ausgeführt.

In einer vorteilhaften Ausführungsform weist die zweite Endscheibe ein Verbindungselement zum Verbinden des Filterelements mit einem Gehäuseteil auf. Das Verbindungselement ist insbesondere als Bajonettverschluss, Gewinde, Schnapp- oder Rastverbindung ausgeführt. Die zweite Endscheibe ist dabei bevorzugt aus einem, verglichen mit der auslassseitigen Endscheiben harten Material (z. B. PP, PE, PA), bevorzugt im Spritzgießverfahren hergestellt.

Möglich ist auch, eine Schnappverbindung, insbesondere eine Ringschnappverbindung, vorzusehen, die besonders dann vorteilhaft ist, wenn Filterelement und Gehäuseunterteil bzw. Deckel als unlösbare Einheit im Wartungsfall ersetzt werden. Das Filterelement ist dann geeignet, mit einem Gehäuseteil - lösbar oder unlösbar - verrastet zu werden.

Die Erfindung betrifft weiter eine Luftfiltereinheit mit einem radial teilbaren Gehäuse und einem darin einsetzbaren Filterelement nach einem der vorhergehenden Ansprüche, wobei das Gehäuse wenigstens zwei Gehäuseteile umfasst, die in axialer Richtung über ein Zugankerelement miteinander zu verbinden sind, wobei das Zugankerelement durch das Filterelement und insbesondere durch das Stützgitter gebildet ist.

Eine bevorzugte Ausführungsform des Filterelements und der Luftfiltereinheit sieht an Gehäuseunterteil bzw. Deckel im Bereich des Verbindungselements wenigstens ein radial verschiebbares Riegelelement vor, das in das Verbindungselement eingreift, wobei das Verbindungselement als Rille, Hinterschnitt oder eine sonstige Eingriffsausnehmung an einem Absatz an der Endscheibe des Luftfilterelements ausgebildet ist, wodurch das Filterelement mit einem Gehäuseteil formschlüssig verriegelt wird.

Sofern die Eingriffsausnehmung am Luftfilterelement als eine durchgängige Rille ausgebildet ist, ist eine beliebige Positionierung des Filterelements gegenüber dem Gehäuseteil möglich.

In einer bevorzugten Ausführungsform sind an der Schnittstelle zwischen den Gehäuseteilen keine Befestigungs- oder Verriegelungselemente vorgesehen. So ist mit den verschiebbaren Riegelelementen ein Zusammenhalt des Gehäuses ohne das eingesetzte Filterelement und damit ein Betrieb der Filtereinheit ohne Luftfilterelement nicht möglich.

In einer vorteilhaften Weiterbildung ist die zweite Endscheibe fest und in ihrer axialen Position definiert mit dem Stützgitter verbunden, z. B. durch eine Klebe-, Schraub-, Schnapp- oder Schweißverbindung, oder bevorzugt durch eine Vergussmasse, z. B. Schmelzklebstoff oder Polyurethan(PU)-schaum, welche beim Aushärten die zweite Endscheibe mit dem Filtermedium und dem Stützgitter formschlüssig verbindet und die zweite Stirnseite des Filtermediums dichtend umschließt. Dabei ist es vorteilhaft, wenn die Innenseite der Endscheibe unmittelbar an dem Stützgitter anliegt

Die feste Verbindung des Stützgitters mit der zweiten Endscheibe hat den Vorteil, dass das Stützgitter des Filterelements als Zuganker in einem radial, das heißt senkrecht zur Mittelachse des Filterelements teilbaren Filtergehäuse verwendet werden kann, welches getrennte Gehäuseteile aufweist. Dadurch können Verschlusselemente bzw. Zugankerelemente am Gehäuse entfallen. Auf diese Weise kann vorteilhaft wirksam sicher gestellt werden, dass eine Verbindung von Gehäuseteilen ohne eingesetztes und nach der Erfindung ausgebildetes Filterelement nicht möglich ist, da dann die Gehäuseteile auseinanderfallen würden. Es ist damit insbesondere nicht möglich, die Luftfiltereinheit vorsätzlich oder fahrlässig ohne eingesetztes Luftfilterelement zu betreiben.

Ein weiterer Vorteil ist, dass durch die definierte Verbindung der zweiten Endscheibe mit dem Stützgitter die Gesamtlänge des Filterelements und dadurch insbesondere der Abstand zwischen der axialen Anlagefläche und dem Verbindungselement der zweiten Endscheibe mit geringen Toleranzen unabhängig von Materialqualitätsschwankungen des Endscheibenmaterials der auslassseitigen Endscheibe und unabhängig von Längentoleranzen des Filtermediums herstellbar ist.

Auf diese Weise hat alleine die axiale Länge des Stützrohrs Einfluss auf die Position des mit der zweiten Endscheibe verbundenen Gehäuseteils. Längentoleranzen der ersten, auslassseitigen Endscheibe oder des Filtermediums bleiben hingegen ohne Einfluss, da erstens die axiale Position des Filterelements durch das Kopplungselement bzw. den Anschlussbereich am Stützgitter definiert ist und zweitens die axiale Position des Verbindungselements der zweiten Endscheibe durch die Länge des Stützgitters definiert ist.

Weitere Merkmale der Erfindung gehen aus der Beschreibung und den Figuren hervor.

### Kurze Beschreibung der Zeichnungen

Fig. 1 zeigt einen Schnitt einer erfindungsgemäßen Ausführungsform eines Filterelements.
Fig. 2 zeigt einen Teilschnitt einer erfindungsgemäßen Ausführungsform einer Luftfiltereinheit.
Fig. 3 zeigt einen Ausschnitt einer Schnittansicht einer erfindungsgemäßen Luftfiltereinheit.
Fig. 4 zeigt in einem Detailausschnitt einen Verbindungsbereich einer erfindungsgemäßen Luftfiltereinheit.
Fig. 5 zeigt eine isometrische Schnittansicht einer erfindungsgemäßen Luftfiltereinheit.

### Ausführungsform(en) der Erfindung

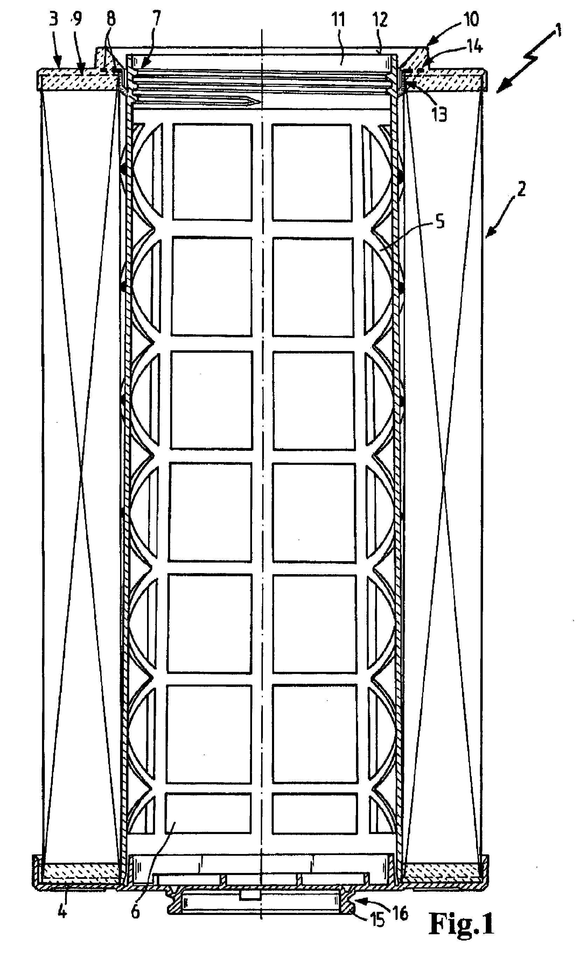

Das in Fig. 1 gezeigte Filterelement 1 umfasst ein hohlzylindrisches, sternförmig gefaltetes Filtermedium 2 sowie eine auslassseitige Endscheibe 3 und eine zweite Endscheibe 4 und ein hohlzylindrisches Stützgitter 5, welches im Innenraum 6 des Filtermediums 2 angeordnet ist. Das Stützgitter 5 liegt vorzugsweise an der Innenwandung des hohlzylindrischen Filtermediums 2 an und erstreckt sich von der auslassseitigen Endscheibe 3 zur zweiten Endscheibe 4. Das Stützgitter 5 weist am auslassseitigen Ende des Filterelements 1 einen Anschlussbereich 11 auf, in welchem das Stützgitter mit einem Kopplungselement endet, welches als Innengewinde ausgebildet ist.

Das Stützgitter ist im Spritzgussverfahren aus Kunststoff, z. B. PP, PE, PA gefertigt und weist im Anschlussbereich 11 einen radial nach außen abstehenden Kragen 8 auf, der die auslassseitige Stirnfläche 9 des Filtermediums 2 teilweise überragt. Dieser Kragen wird gemeinsam mit der auslassseitigen Stirnfläche 9 des Filtermediums von der auslassseitigen Endscheibe 3 umschlossen, welche vorzugsweise aus einem elastisch verformbaren Kunststoff, insbesondere geschäumtem PUR besteht. Die auslassseitige Endscheibe 3 weist eine ringförmige Axialdichtung 10 zur Trennung der Rohseite von der Reinseite in einem Filtergehäuse auf. Die Axialdichtung 10 ist vorzugsweise einstückig mit der auslassseitigen Endscheibe 3 als ringförmige axiale Erhebung ausgebildet, die bei der Montage des Filterelements in einem Gehäuse verpresst werden kann.

Die auslassseitige Stirnfläche 9 des Filtermediums liegt nicht direkt an dem Kragen an. Dies hat den Vorteil, dass Längentoleranzen des Filtermediums bei der Fertigung der Endscheibe ausgeglichen werden können. Vorteilhaft ist zwischen Kragen 8 und Stirnfläche 9 des Filtermediums ein Spalt vorgesehen, welcher durch Endscheibenmaterial gefüllt ist. Auf diese Weise kann die Übertragung von an der Axialdichtung entstehenden Kräften auf das Filtermedium minimiert werden.

Der Anschlussbereich 11 weist an seinem Ende eine axiale Anlagefläche 12 zur Anlage an einem Filtergehäuse auf. Auf diese Weise wird bei der Montage des Filterelements 1 dessen Endposition im Wesentlichen durch die Maße des Stützrohres bestimmt. Die Dichtung 10 wird genau so weit verformt, wie dies die Geometrie des Anschlussbereichs 11 zulässt. Hierdurch wird die Position des Filterelements 1 unabhängig von den Härte- und Maßtoleranzen der Axialdichtung.

Die Axialdichtung 10 ist hinsichtlich der radialen Position im Bereich des Kragens 8 angeordnet. Auf diese Weise wirkt die Kraft, welche durch das Verspannen des Filterelements im Gehäuse entsteht, auf den Kragen 8 und wird von diesem abgestützt. Auf diese Weise können Scherkräfte an Verbindungsstellen zwischen Endscheibenmaterial 3 und Filter- oder Stützgittermaterial vermieden werden.

Der Kragen umfasst einen ersten, parallel zur Mittelachse verlaufenden Abschnitt 13 und einen an den ersten Abschnitt anschließenden zweiten, senkrecht zur Mittelachse verlaufenden Abschnitt 14. Die Abschnitte bilden dabei einen Winkel, welcher die innere Kante der auslassseitigen Stirnfläche 9 des Filtermediums einschließt.

Der Kragen 8 ist als Gitter ausgeführt. Auf diese Weise kann Endscheibenmaterial den Kragen 8 durchdringen. Dies hat den Vorteil, dass die Belastbarkeit der Verbindung zwischen Kragen und Endscheibenmaterial verbessert wird.

Der erste Abschnitt 13 verläuft parallel zu und beabstandet vom Anschlussbereich 11 des Stützgitters. Er ist dabei vorteilhafter Weise mittels eines ringförmig umlaufenden Steges oder einer Vielzahl von umlaufend angeordneten Stegen mit dem Anschlussbereich 11 verbunden. Auf diese Weise kann der Kragen derart in die auslassseitige Endscheibe 3 eingebettet sein, dass das Material der Endscheibe nicht mit dem Hauptteil des Stützgitters 5 bzw. nicht mit dem Anschlussbereich 11 verbunden ist. Dies ist insbesondere bei Endscheiben von Vorteil, welche aus im Rohzustand fließfähigen Materialien wie z. B. Polyurethan (PUR) in einem Gießverfahren, insbesondere in Gießschalen hergestellt und dabei mit dem Filtermedium und dem Kragen verbunden werden. Der zweite Kragenabschnitt 14 schließt an den ersten Abschnitt 13 an und verläuft radial nach außen.

Sowohl der erste 13 als auch der zweite Kragenabschnitt 14 sind in Endscheibenmaterial bzw. die Endscheibe 3 eingebettet, wobei jedoch durch die radiale Beabstandung des ersten Kragenabschnittes 13 von dem Stützrohr kein Kontakt zwischen Endscheibe und Stützgitter besteht. Auf diese Weise kann die Endscheibe in einer einfachen Ringform gegossen werden.

Die Axialdichtung 10 überragt in unverspanntem Zustand die axiale Anlagefläche 12. Bei der Montage des Filterelements wird so die Dichtung unabhängig von ihrer Höhe in unverspanntem Zustand bis auf Höhe der Anlagefläche verpresst.

Die Dichtfläche des Gehäuses dient dabei gleichzeitig als Anschlag für die Anlagefläche 12 des Stützgitters.

Die zweite Endscheibe 4 ist geschlossen ausgeführt und weist ein Verbindungselement 15 zum Verbinden des Filterelements mit einem Gehäuseteil auf, wobei das Verbindungselement 15 an einem Absatz an der zweiten Endscheibe 4 des Filterelements 1 ausgebildet ist. Das Verbindungselement ist insbesondere als zumindest teilweise umlaufende Rille 16 ausgeführt, in welche ein am Gehäuse angeordnetes, radial verschiebbares Riegelelement eingreifen kann. Die zweite Endscheibe ist dabei bevorzugt aus einem verglichen mit der auslassseitigen Endscheiben harten Material (z. B. Polypropylen (PP), Polyester (PEs), Polyethylen (PE), Polyamid (PA)), bevorzugt im Spritzgießverfahren hergestellt.

In einer vorteilhaften Weiterbildung ist die zweite Endscheibe 4 fest mit dem Stützgitter verbunden, z. B. durch eine Klebe- oder Schweißverbindung, oder bevorzugt durch eine Vergussmasse, insbesondere aus dem gleichen Material wie die reinseitige Endscheibe, welche beim Aushärten die zweite Endscheibe mit dem Filtermedium und dem Stützgitter formschlüssig verbindet und die zweite Stirnseite des Filtermediums dichtend umschließt.

Die Verbindung des Stützgitters mit der zweiten Endscheibe hat den Vorteil, dass das Stützgitter des Filterelements als Zuganker in einem Filtergehäuse verwendet werden kann, welches axial getrennte Gehäuseteile aufweist. Dadurch können Verschlusselemente bzw. Zugankerelemente am Gehäuse entfallen. Auf diese Weise kann vorteilhaft wirksam sicher gestellt werden, dass eine Verbindung von Gehäuseteilen ohne eingesetztes und nach der Erfindung ausgebildetes Filterelement nicht möglich ist, da dann die Gehäuseteile schlichtweg auseinanderfallen würden. Es ist damit insbesondere nicht möglich, die Luftfiltereinheit vorsätzlich oder fahrlässig ohne eingesetztes Luftfilterelement zu betreiben. Ein weiterer Vorteil ist, dass durch die definierte Verbindung der zweiten Endscheibe mit dem Stützgitter die Gesamtlänge des Filterelements und dadurch insbesondere der Abstand zwischen der axialen Anlagefläche und dem Verbindungselement der zweiten Endscheibe mit geringen Toleranzen unabhängig von Materialqualitätsschwankungen des Endscheibenmaterials der auslassseitigen Endscheibe und unabhängig von Längentoleranzen des Filtermediums herstellbar ist.

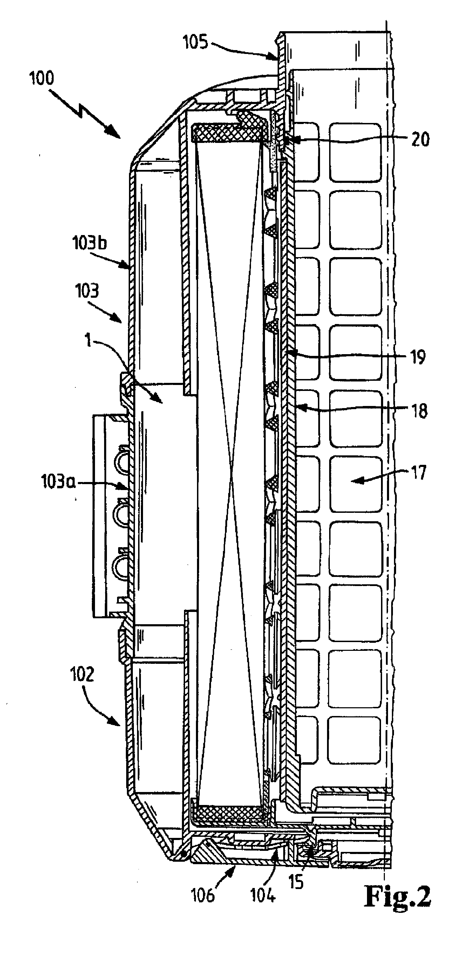

Fig. 2 zeigt das Filterelement 1 in eingebautem Zustand in der Luftfiltereinheit. Die Luftfiltereinheit 100 umfasst das Filterelement 1 und ein Sekundärluftfilterelement 17 sowie ferner ein Gehäuse 101, in welchem die Elemente aufgenommen sind. Das Gehäuse 101 umfasst ein Gehäusegrundelement 103 und einen Gehäusedeckel 102. Der Gehäusedeckel 102 ist auf das Gehäusegrundelement 103 aufschiebbar. Das Gehäusegrundelement besteht in einer vorteilhaften Ausführungsform aus einem Sockelteil 103a und einem Auslassteil 103b, an welchem der Auslassstutzen 105 angeordnet ist. Das Sockelteil 103a und das Auslassteil 103b sind entweder einstückig als Spritzgussteil ausgeführt oder als separate Bauteile durch eine Schweißverbindung, insbesondere eine Laser-, Reib-, Rotation- oder Vibrationsschweißverbindung dicht verbunden. Das Sekundärluftfilterelement 17 umfasst vorzugsweise ein Mittelrohr 18 und ist in den Auslassstutzen 105 eingesteckt und gegen diesen mit einer Radialdichtung 20 abgedichtet.

Am Gehäusedeckel 102 sind im Bereich des Verbindungselements 15 zwei gegenüberliegende, radial verschiebbares Riegelelemente 104 vorgesehen, die in die Rille 16 des Verbindungselements 15 eingreifen, wodurch das Filterelement mit einem Gehäusedeckel 102 formschlüssig verriegelt wird. Vorzugsweise werden die Riegelelemente 104 durch Hebel 106 bewegt und fixiert.

Sofern die Rille 16 durchgängig ausgebildet ist, ist eine beliebige Positionierung des Filterelements gegenüber dem Gehäusedeckel 102 möglich.

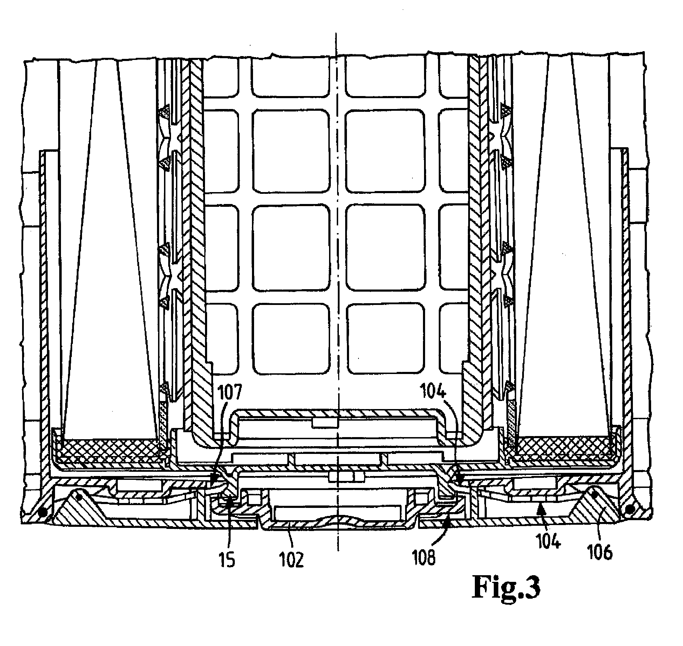

Figur 3 zeigt in einer Teilansicht den Verbindungsbereich des Filterelements 1mit dem Gehäusedeckel 102. Die beiden Riegelelemente 104 liegen sich gegenüber und greifen in der gezeigten Endposition in die Rille 16 der zweiten Endscheibe 4 ein. Der Gehäusedeckel 102 weist zu diesem Zweck jeweils eine schlitzförmige Öffnung 107 für das Riegelelement 104 auf, durch welche die Riegelelemente 104 in den Gehäuseinnenraum ragen. Zum Lösen der Verbindung wird der Hebel 106 angehoben und dadurch das Riegelelement 104 aus der Rille 16 gezogen. Der Gehäusedeckel 102 weist im Inneren eine dem Filterelement zugewandte, ringförmige Ausnehmung 108 auf, in welche das Verbindungselement bei der Montage eintauchen kann. In einer vorteilhaften Ausführungsform sind in der Ausnehmung 108 radial verlaufende Stege angeordnet, welche mit korrespondierenden Nuten im Verbindungselement in Eingriff bringbar sind. Auf diese Weise kann das Filterelement 1 zuerst in den Gehäusedeckel 102 eingesetzt und verriegelt und anschließend in das Gehäusegrundelement 103 eingeschraubt werden.

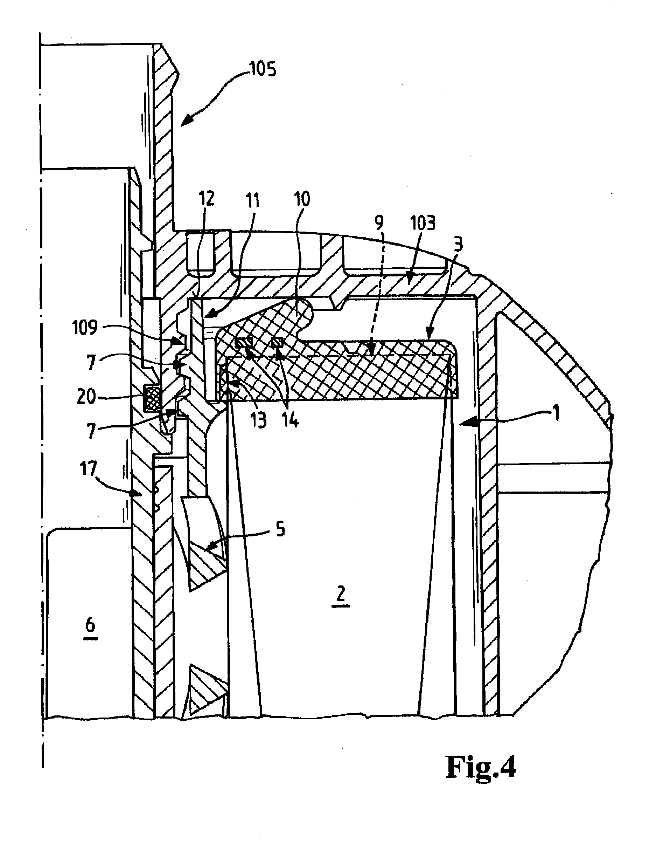

Figur 4 zeigt in einem Detailausschnitt den Verbindungsbereich des Filterelements 1 mit dem Gehäusegrundelement 103 sowie das Sekundärluftfilterelement 17. Das Sekundärluftfilterelement 17 ist in den Montagestutzen 109 eingeschoben und weist eine Radialdichtung 20 zur Abdichtung gegenüber dem Montagestutzen auf. Im Anschlussbereich 11 des Filterelements 1 ist das Stützgitter 5 als rohrförmiger Fortsatz ausgebildet, welcher an seiner Innenfläche ein leicht konisches Sägezahngewinde als Kopplungselement 7 aufweist. Zur Montage des Filterelements ist am Gehäusegrundelement 103 ein ebenfalls rohrförmiger Montagestutzen 109 vorgesehen, welcher sich in den Innenraum des Gehäuses erstreckt und ein korrespondierendes, konisch ausgebildetes Sägezahngewinde aufweist. Durch die Konizität des Gewindes und die Ausführung als Sägezahngewinde, bei welchem die Kontaktflächen einen flachen Winkel (ca. 0 bis 20°) zur Stirnfläche 9 aufweisen, wird die Montage und Demontage des Filterelements insbesondere hinsichtlich der nötigen Kräfte erleichtert. Gezeigt ist das Filterelement 1 in montiertem Zustand, in welchem die Anlagefläche 12, in welcher das Stützgitter 5 endet, an der Innenfläche des Gehäusegrundelements 103 anliegt, wobei die Innenfläche des Gehäusegrundelements 103 auch die Dichtfläche des Gehäuses darstellt, an welcher die Axialdichtung 10 anliegt. Der Grad der Verpressung der mit der Endscheibe 3 ausgeformten Axialdichtung 10 wird allein durch die Position der Anlagefläche 12 bestimmt. Eventuelle Höhentoleranzen der Dichtung in Bezug auf das Stützgitter 5 und in Bezug auf den zweiten Kragenabschnitt 14 oder die Stirnfläche 9 des Filtermediums 2 haben somit keinen Einfluss auf die Position der zweiten Endscheibe 4 und des daran angeordneten Verbindungselements 15 (in Fig. 4 nicht gezeigt). Für den Fall, dass das Filtermedium beim Trocknen nach Wassereintrag in Längsrichtung schrumpft, wird durch diese Anordnung einerseits die Dichtwirkung der Axialdichtung 10 sicher gestellt und andererseits durch die feste Verbindung der zweiten Endscheibe 4 mit dem Stützrohr 5 auch die Position des an der zweiten Endscheibe angeordneten Verbindungselements 15 fixiert, wodurch eine zuverlässige Montage vom Gehäusedeckel 102 auf dem Gehäusegrundelement 103 erzielt wird. Ferner ist sichergestellt, dass die Riegelelemente 104 in jeder Toleranzlage in die Rille 16 der zweiten Endscheibe 4 eingreifen können.

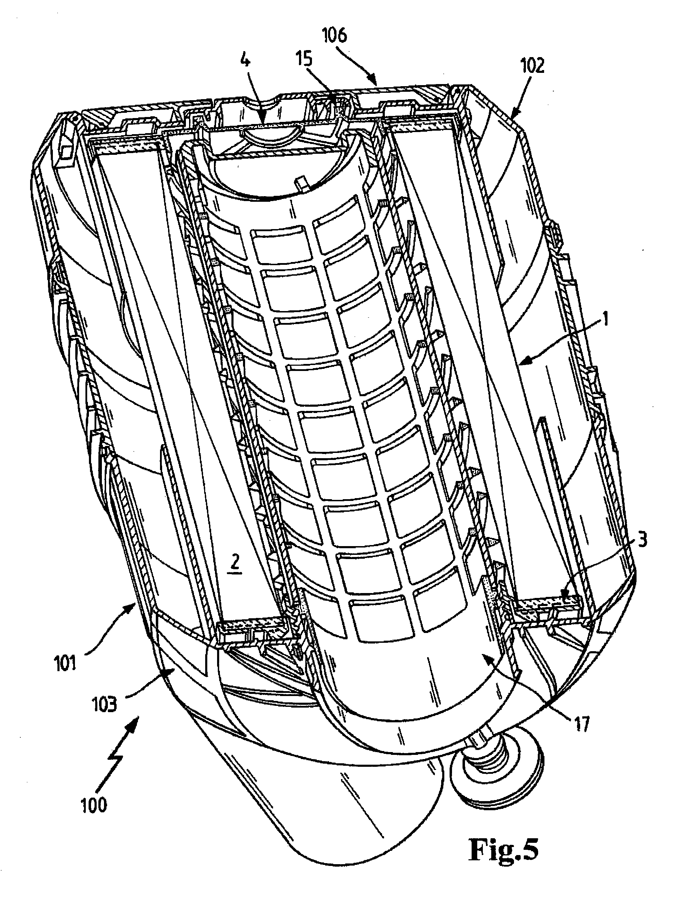

Fig. 5 zeigt eine isometrische Schnittansicht einer erfindungsgemäßen Luftfiltereinheit 100 mit einem Filterelement 1 und einem Gehäuse 101.

## Patentansprüche

1. Filterelement (1) zur Fluidfiltration, insbesondere Luftfilterelement für die Ansaugluft von Brennkraftmaschinen, umfassend
a. ein hohlzylindrisches, insbesondere sternförmig gefaltetes Filtermedium (2),
b. eine auslassseitige Endscheibe (3) und eine zweite Endscheibe (4),
c. ein hohlzylindrisches Stützgitter (5), welches im Innenraum (6) des Filtermediums angeordnet ist,
wobei das Stützgitter am auslassseitigen Ende des Filterelements einen Anschlussbereich (11) aufweist, an dessen Ende eine axiale Anlagefläche (12) zur Anlage an einem Filtergehäuse angeordnet ist und in welchem das Stützgitter (5) mit einem als Gewinde oder Bajonettverschluss ausgeführten Kopplungselement (7) zum Koppeln des Filterelements an ein Filtergehäuse, insbesondere an den Auslassstutzen eines Filtergehäuses, versehen ist, wobei das Stützgitter (5) im Anschlussbereich (7) einen radial nach außen abstehenden Kragen (8) aufweist, der die auslassseitige Stirnfläche (9) des Filtermediums teilweise überragt, **dadurch gekennzeichnet, dass** die auslassseitige Endscheibe (3) aus einem elastischen Kunststoff gebildet ist, die auslassseitige Stirnfläche (9) des Filtermediums (2) und den Kragen (8) umschließt und eine ringförmige Axialdichtung (10) aufweist, die einstückig mit der auslassseitigen Endscheibe (3) ausgebildet ist.

2. Filterelement nach Anspruch 1, **dadurch gekennzeichnet, dass** die Axialdichtung (10) hinsichtlich der radialen Position im Bereich des Kragens (8) angeordnet ist.

3. Filterelement nach einem der vorhergehenden Ansprüche, **dadurch gekennzeichnet, dass** die Axialdichtung (10) verformbar (und insbesondere bei der Montage des Filterelements verspannbar) ist und in unverspanntem Zustand die axiale Anlagefläche (12) in axialer Richtung überragt.

4. Filterelement nach einem der vorhergehenden Ansprüche, **dadurch gekennzeichnet, dass** der Kragen (8) einen ersten, parallel zur Mittelachse verlaufenden Abschnitt (13) und einen an den ersten Abschnitt (13) anschließenden zweiten, senkrecht zur Mittelachse verlaufenden Abschnitt (14) umfasst.

5. Filterelement nach einem der vorhergehenden Ansprüche, **dadurch gekennzeichnet, dass** die zweite Endscheibe (4) geschlossen ausgeführt ist.

6. Filterelement nach einem der vorhergehenden Anspruche, **dadurch gekennzeichnet, dass** die zweite Endscheibe (4) ein Verbindungselement (15) zum Verbinden des Filterelements (1) mit einem Gehäuseteil, insbesondere Gehäusedeckel (102) aufweist.

7. Filterelement nach Anspruch 6, **dadurch gekennzeichnet, dass** das Verbindungselement als radiale, zumindest teilweise umlaufende Rille (16) zum Eingriff von gehäuseseitigen, radial verschiebbaren Riegelelementen (104) ausgebildet ist.

8. Luftfiltereinheit mit einem radial teilbaren Gehäuse (101) und einem darin eingesetzten Filterelement nach einem der vorhergehenden Ansprüche.

9. Luftfiltereinheit nach Anspruch 8, das Filterelement aufweisend die Merkmale der Ansprüche 5 - 7, wobei das Gehäuse wenigstens zwei Gehäuseteile (102, 103) umfasst, die in axialer Richtung über ein Zugankerelement miteinander zu verbinden sind, wobei das Zugankerelement durch das Filterelement (1), insbesondere das Stützgitter (5) gebildet ist.

10. Luftfiltereinheit nach Anspruch 8 oder 9, **dadurch gekennzeichnet, dass** im Inneren des Filterelements (1) ein Sekundärluftfilterelement (17) angeordnet ist.

## Claims

1. Filter element (1) for fluid filtration, in particular air filter element for the intake air of internal combustion engines, comprising
a. a hollow-cylindrical, in particular star-shaped folded filter medium (2),
b. an outlet-sided end disk (3) and a second end disk (4),
c. a hollow-cylindrical support grid (5), which is disposed in the interior space (6) of the filter medium,
wherein the support grid features at the outlet-sided end of the filter element a connecting area (11), at the end of which an axial contact area (12) for contacting a filter housing is disposed and in which the support grid (5) is provided with a coupling element (7) designed as thread or bayonet coupling for coupling the filter element with a filter housing, in particular with the outlet port of a filter housing, wherein the support grid (5) features in the connecting area (7) a radially outwardly protruding collar (8), which projects partially the outlet-sided front face (9) of the filter element, **characterized in that** the outlet-sided end disk (3) is made of a resilient synthetic material, encloses the outlet-sided front face (9) of the filter medium (2) and the collar (8) and features an annular axial seal (10), which is realized in one piece with the outlet-sided end disk (3).

2. Filter element according to claim 1, **characterized in that** the axial seal (10) with regard to the radial position is disposed in the area of the collar (8).

3. Filter element according to one of the above claims, **characterized in that** the axial seal (10) is deformable (and in particular during the installation of the filter element clampable) and that it protrudes the axial contact area (12) in axial direction in an unclamped state.

4. Filter element according to one of the above claims, **characterized in that** the collar (8) comprises a first section (13) extending parallel to the central axis and a second section (14) subsequent to the first section (13) and extending perpendicular to the central axis.

5. Filter element according to one of the above claims, **characterized in that** the second end disk (4) is realized in a closed manner.

6. Filter element according to one of the above claims, **characterized in that** the second end disk (4) features a connecting element (15) for connecting the filter element (1) with a housing component, in particular a housing cover (102).

7. Filter element according to claim 6, **characterized in that** the connecting element is designed as radial, at least partially circumferential groove (16) for the engagement of housing-sided, radially movable locking elements (104).

8. Air-filter unit with a radially dividable housing (101) and a filter element according to one of the above claims inserted therein.

9. Air-filter unit according claim 8, the filter element featuring the features of the claims 5 to 7, wherein the housing comprises at least two housing components (102, 103) which are to be connected with each other in axial direction via a tie rod element, wherein the tie rod element is formed by the filter element (1), in particular by the support grid (5).

10. Air-filter unit according to claim 8 or 9, **characterized in that** a secondary air filter element (17) is disposed inside of the filter element (1).

## Revendications

1. Élément filtrant (1) pour la filtration de fluides, notamment élément de filtre à air pour l'air d'aspiration de moteurs à combustion interne, comprenant
a. un milieu filtrant (2) en forme de cylindre creux, notamment plié en étoile,
b. un disque d'extrémité (3) du côté sortie et un deuxième disque d'extrémité (4),
c. une grille de support (5) en forme de cylindre creux qui est disposée dans l'espace intérieur (6) du milieu filtrant,
la grille de support présentant, à l'extrémité du côté sortie de l'élément filtrant, une zone de raccordement (11) à l'extrémité de laquelle une surface de contact (12) axiale est disposée pour la mise en contact sur un boîtier de filtre et dans laquelle la grille de support (5) est pourvue d'un élément d'accouplement (7) exécuté sous forme de filet ou de joint baïonnette et permettant d'accoupler l'élément filtrant à un boîtier de filtre, en particulier à la tubulure d'écoulement d'un boîtier de filtre, la grille de support (5) présentant, dans la zone de raccordement (7), un collet (8) faisant saillie vers l'extérieur en sens radial et dépassant partiellement la face frontale (9) côté sortie du milieu filtrant, **caractérisé en ce que** le disque d'extrémité (3) côté sortie est constitué d'une matière plastique élastique, enrobe la face frontale (9) côté sortie du milieu filtrant (2) et le collet (8) et est pourvu d'un joint axial annulaire (10) qui est réalisé en un bloc avec le disque d'extrémité (3) côté sortie.

2. Élément filtrant selon la revendication 1, **caractérisé en ce que** le joint axial (10) est disposé, au niveau radial, dans la zone du collet (8).

3. Élément filtrant selon l'une des revendications précédentes, **caractérisé en ce que** le joint axial (10) est déformable (et peut en particulier être déformé lors du montage de l'élément filtrant) et, à l'état non déformé, dépasse en sens axial de la surface de contact (12) axiale.

4. Élément filtrant selon l'une des revendications précédentes, **caractérisé en ce que** le collet (8) comprend une première section (13) évoluant de manière parallèle à l'axe médian et une deuxième section (14) adjacente à la première section (13) et évoluant à la verticale par rapport à l'axe médian.

5. Élément filtrant selon l'une des revendications précédentes, **caractérisé en ce que** le deuxième disque d'extrémité (4) est exécuté de façon fermée.

6. Élément filtrant selon l'une des revendications précédentes, **caractérisé en ce que** le deuxième disque d'extrémité (4) est doté d'un élément de jonction (15) permettant de relier l'élément filtrant (1) à une partie de boîtier, notamment à un couvercle de boîtier (102).

7. Élément filtrant selon la revendication 6, **caractérisé en ce que** l'élément de jonction est conçu comme rainure (16) radiale, au moins en partie circulaire, destinée à l'encliquetage d'éléments de verrouillage (104) pouvant être déplacés, du côté du boîtier, en sens radial.

8. Unité de filtre à air avec un boîtier (101) divisible en sens radial et un élément filtrant inséré à l'intérieur, selon l'une des revendications précédentes.

9. Unité de filtre à air selon la revendication 8, l'élément filtrant présentant les caractéristiques des revendications 5 à 7, le boîtier comprenant au moins deux parties de boîtier (102, 103) qui peuvent être reliées l'une à l'autre en sens axial au moyen d'un élément de tirant d'ancrage, l'élément de tirant d'ancrage étant formé par l'élément filtrant (1), en particulier par la grille de support (5).

10. Unité de filtre à air selon la revendication 8 ou 9, **caractérisé en ce qu**'un élément de filtre à air secondaire (17) est placé à l'intérieur de l'élément filtrant (1).
